# EUROPÄISCHE PATENTSCHRIFT

(11) **EP 2 537 173 B1**
(45) Veröffentlichungstag und Bekanntmachung des Hinweises auf die Patenterteilung: **02.11.2016**
(21) Anmeldenummer: 11706159.8
(22) Anmeldetag: 16.02.2011
(51) Int. Cl.: H01H 23/14, H01H 23/30

(54) **ELEKTRISCHER SCHALTER**
ELECTRICAL SWITCH
COMMUTATEUR ÉLECTRIQUE

(30) Priorität: 18.02.2010 DE 102010008492
(43) Veröffentlichungstag der Anmeldung: 26.12.2012
(73) Patentinhaber: Marquardt GmbH, 78604 Rietheim-Weilheim (DE)
(72) Erfinder: NEITZEL, Roland, 78570 Mühlheim (DE)
(74) Vertreter: Otten, Roth, Dobler & Partner mbB Patentanwälte
(86) Internationale Anmeldenummer: PCT/EP2011/000736
(87) Internationale Veröffentlichungsnummer: WO 2011/101127

(56) Entgegenhaltungen:
- WO-A1-00/26931
- DE-A1- 3 600 910
- US-A1- 2004 182 685
- US-A1- 2009 255 795

## Beschreibung

Die Erfindung betrifft einen elektrischen Schalter nach dem Oberbegriff des Patentanspruchs 1,

Derartige elektrische Schalter, die mittels einer Wippe betätigt werden, werden als Bedienschalter für Geräte verwendet. Insbesondere kann der Bedienschalter als Multifunktionsschalter am Lenkrad eines Kraftfahrzeugs, beispielsweise zur Bedienung des Autoradios, des Navigationssystems, des Telefons, zur Gangwahl für das Getriebe o. dgl., eingesetzt werden.

Ein solcher elektrischer Wippschalter weist ein Gehäuse sowie wenigstens ein im Gehäuse befindliches Kontaktsystem auf. Zum Schalten des Kontaktsystems ist der Schalter mit einem in der Art einer Wippe ausgestalteten, um eine Drehachse zwischen einer neutralen Stellung und einer Betätigungsstellung verschwenkbaren Betätigungsorgan versehen. Das Betätigungsorgan weist wiederum wenigstens eine Betätigungsfläche, die sich an einer Seite des Betätigungsorgans befindet, zum manuellen Verschwenken und damit zur Betätigung des Betätigungsorgans auf. Das Betätigungsorgan ist mittels einer elastischen Kraft in die neutrale Stellung vorgespannt, womit das Kontaktsystem bei unbetätigtem Betätigungsorgan ausgeschaltet ist. In der Betätigungsstellung hingegen wirkt das Betätigungsorgan schaltend auf das Kontaktsystem ein. Derartige Wippschalter sind in der US 2004/182685 A1, in der US 2009/255795 A1 sowie in der WO 00/26931 A1 beschrieben.

Weiter ist in der DE 36 00 910 A1 ein elektrischer Schalter beschrieben, bei dem ein zum Toleranzausgleich verstellbares Betätigungsorgan vorgesehen ist.

Die als Kontaktsystem in solchen Bedienschaltern verwendeten Schaltelemente, wie Mikroschalter, Kontaktschaltmatten, Sensoren o. dgl., werden hauptsächlich über spezielle Betätigungselemente oder Designteile, wie Wippen, Tasten oder Kappen, betätigt. Die Betätigungsart richtet sich hierbei nach den bauraumtechnischen Möglichkeiten oder auch nach den Designvorgaben des Kunden. Insbesondere kann bei einer Wippenbetätigung eines flachbauenden Bedienschalters aus Platzgründen und/oder aus designtechnischen Gründen eine ansonsten übliche Drehachse in der Mitte der Wippe nicht oder lediglich in aufwendiger Weise angebracht werden. Auch müsste bei einer mittig angebrachten Drehachse ein Freiraum für die Auslenkung der Wippen vorgesehen werden, was wiederum die Dichtheit gegenüber äußeren Medien verschlechtert und/oder auch die Lichtabschottung der Symbolausleuchtung für die Wippe im Spaltbereich erschwert.

Der Erfindung liegt die Aufgabe zugrunde, den elektrischen Schalter derart weiterzuentwickeln, dass die Anordnung einer mittigen Drehachse nicht notwendig ist.

Diese Aufgabe wird bei einem gattungsgemäßen elektrischen Schalter durch die kennzeichnenden Merkmale des Anspruchs 1 und 3 gelöst.

Beim erfindungsgemäßen Schalter wirkt die elastische Kraft mit dem Betätigungsorgan beim Verschwenken des Betätigungsorgans derart zusammen, dass das Betätigungsorgan an der der Betätigungsfläche gegenüberliegenden Seite des Betätigungsorgans zur Ausbildung der Drehachse am Gehäuse und/oder an einem gehäusefesten Lagerelement anliegt.

Geschaffen ist durch die Erfindung somit ein flachbauender Bedienschalter mit einer Art von "Quasiwippe". Die Quasiwippe ist wie eine herkömmliche Wippe eines elektrischen

Schalters durch den Benutzer bedienbar. Vorteilhafterweise benötigt die Quasiwippe jedoch einen lediglich geringeren Bauraum als eine herkömmliche Wippe, da insoweit eine mittige Drehlagerung nicht vorhanden ist. Dennoch ist die Quasiwippe so funktionssicher wie eine herkömmliche Wippe. Weitere Ausgestaltungen der Erfindung sind Gegenstand der Unteransprüche.

Für besonders bevorzugte Ausgestaltungen der Erfindung, bei dem das Bedienteil als Quasiwippe ausgebildet ist, ist noch nachfolgendes festzustellen.

Bei einer ersten Lösung wird die Quasiwippe im Bereich der Betätigungspunkte durch das Schaltelement oder durch eine Feder vorgespannt. Die Schaltelemente drücken die Quasiwippe umlaufend mit ihrem Rand gegen eine Aufnahme in Z-Richtung. Die Aufnahme kann ein Gehäuse, eine Blende o. dgl. sein. Seitlich wird die Quasiwippe über zwei Flächenführungen geführt, um ein Verschieben in der X-Richtung zu verhindern. In Y-Richtung wird eine Zentrierung in der Form eines Domes ausgeführt, der sowohl ein Verschieben in Y-Richtung verhindert, wie auch ein gleichzeitiges Betätigen beider Schaltelemente erschwert oder je nach Ausführung ganz verhindert. Die Aufnahme der Zentrierung durch den Dom ist dem Bewegungsablauf des Domes nachgebildet, um so nur die kleinstmögliche Verschiebung in Y-Richtung, d. h. ein Minimalspiel zuzulassen. Ein seitliche Verschieben der Quasiwippe in X- und Y-Richtung, kann auch über den seitlichen Rand der Wippen verhindert werden, indem die Wippen in der Aufnahme seitlich gehalten werden. Wird nun die Quasiwippe an einer Seite (A) betätigt, so erfolgt die Drehung über den Wippenrand auf der gegenüberliegenden Seite (B), die als Drehachse fungiert. Wird nun auf der Seite (B) betätigt, so erfolgt die Drehung in gleicher Weise über den Wippenrand auf der gegenüberliegenden Seite (A), die nun als Drehachse fungiert.

Als Vorteile für die erste Lösung ist noch folgendes zu nennen:
- Fixierung an der Innenflanke, bessere Zentrierung.
- Nur einseitiges Betätigen möglich.
- Vollflächige Anlage der Wippe bei Nichtbetätigung, womit Wasserschutz sowie Schutz gegen Lecklicht bzw. Überstrahlung gegeben ist.
- Bauraumsparend.
- Schutz gegen Herausfallen der Wippen.

Bei einer zweiten Lösung können die Lager der Quasiwippe auch in der Art ausgeführt werden, dass unterhalb der Quasiwippe im Bereich der Betätigung jeweils zwei Laschen mit Langlöchern angeordnet sind. Die Laschen verrasten mit einem Trägerteil, das aus einem Gehäuse, einem Sockel oder einem Zwischenteil bestehen kann, und sind innerhalb der Laschen beweglich gelagert. Die Langlöcher bilden hierzu die Betätigungsbahn nach und dienen je Betätigungsseite in Verbindung mit den Rastnasen als Drehachse. Wird nun die Quasiwippe an einer Seite (A) betätigt, so erfolgt die Drehung über die zwei verrasteten Laschen auf der gegenüberliegenden Seite (B), die als Drehachse fungiert. Wird nun auf der Seite (B) betätigt, so erfolgt die Drehung in gleicher Weise über die zwei verrasteten Laschen auf der gegenüberliegenden Seite (A), die nun als Drehachse fungiert.

Als Vorteile für die zweite Lösung ist noch folgendes zu nennen:
- Fixierung über die Quasidrehlager, bessere Zentrierung.
- Nur einseitiges Betätigen möglich.
- Wasserschutz sowie Schutz gegen Lecklicht bzw. Überstrahlung.
- Bauraumsparend.
- Schutz gegen Herausfallen der Wippen.

Die mit der Erfindung erzielten Vorteile bestehen insbesondere darin, dass durch die Verwendung von Quasiwippen ein flacher Bedienschalter mit großen oder auch kleinen

Wippen konstruiert werden kann, der durch die Vermeidung einer mittigen Drehachse auch neue Gestaltungsfreiräume für das Design der Wippen sowie auch in der Bauraumtiefe zulässt. Durch den umlaufenden, anliegenden Rand der Quasiwippen kann sowohl die Dichtheit gegenüber äußeren Medien, wie auch der Schutz gegen Lecklicht, d. h. gegen Überstrahlung, für die Beleuchtung des Schalters deutlich verbessert werden. Die Relativbewegung auf die Schaltelemente wird durch die wechselnden, außermittigen Drehachsen und die dadurch erzielte Verlängerung des Betätigungshebels sowie durch die Verkleinerung des Auslenkungswinkels der Quasiwippe verringert. Die Verringerung der Relativbetätigung hat einen positiven Einfluss auf die mechanische und/oder elektrische Lebensdauer der Schaltelemente, die dadurch deutlich erhöht wird. Durch den umlaufenden Rand der Quasiwippen wird auch ein verstärkter Schutz gegen das Herausfallen der Quasiwippen erreicht, was z.B. bei einem Multifunktionsschalter im Lenkrad und einem etwaigen Airbag-Schuss dringend erforderlich ist. Durch die mittige Zentrierung (Y-Richtung) kann auch eine Doppelbetätigung der Quasiwippen vermieden werden, da die Zentrierung bei erfolgter einseitiger Betätigung als Anschlag für die zweite Betätigungsseite dient. Die mittige Zentrierung ist so gestaltet, dass sie gegenüber äußeren Einflüssen, wie Wasser, Staub o. dgl., abgedichtet ist und auch durch zusätzliche Herstellungsprozessschritte, wie Lackieren, Verchromen o. dgl. nicht verschmutzt oder beeinflusst werden kann. In X-Richtung wird die Quasiwippe über Flächenführungen geführt, um ein Verschieben der Quasiwippe zu verhindern.

Ausführungsbeispiele der Erfindung mit verschiedenen Weiterbildungen und Ausgestaltungen sind in den Zeichnungen dargestellt und werden im folgenden näher beschrieben. Es zeigen
- Fig. 1: schematisch ein Lenkrad mit einer Bedienschalter-Anordnung für ein Kraftfahrzeug,
- Fig. 2: den elektrischen Bedienschalter aus Fig. 1 in vergrößerter Darstellung,
- Fig. 3: schematisch einen Schnitt entlang der Linie 3-3 in Fig. 2,

- Fig. 4: einen Schnitt wie in Fig. 3, wobei der Schalter betätigt wird,
- Fig. 5: den elektrischen Schalter aus Fig. 2 in einer durchsichtigen Darstellung, wobei das Führungsmittel als Einzelteil vergrößert dargestellt ist,
- Fig. 6: den elektrischen Bedienschalter gemäß einer weiteren Ausführung in teilweise aufgeschnittener Darstellung,
- Fig. 7: den elektrischer Bedienschalter aus Fig. 6 in einer weiteren Ausgestaltung,
- Fig. 8: einen Schnitt wie in Fig. 3 gemäß einer weiteren Ausgestaltung und
- Fig. 9: einen Schnitt wie in Fig. 4 gemäß der weiteren Ausgestaltung.

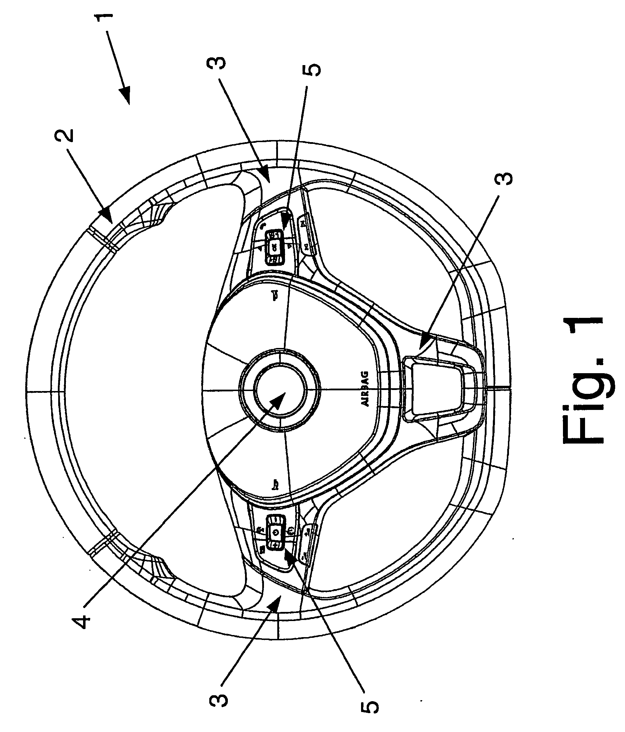

In Fig. 1 ist ein Lenkrad 1 für ein Kraftfahrzeug zu sehen. Das Lenkrad 1 umfasst einen Lenkradkranz 2 sowie Lenkradspeichen 3 und einen mittigen Lenkradtopf 4, in dem beispielsweise ein Airbag angeordnet sein kann. An zwei der seitlichen Lenkradspeichen 3 sind elektrische Schalter 5 als Bedienschalter für diverse Geräte im Kraftfahrzeug, beispielsweise für das Autoradio, für das Telefon, für einen Bildschirm eines Navigationssystems o. dgl., angeordnet.

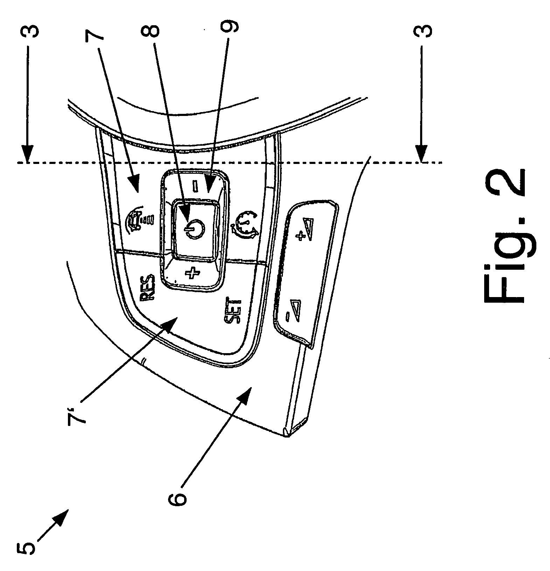

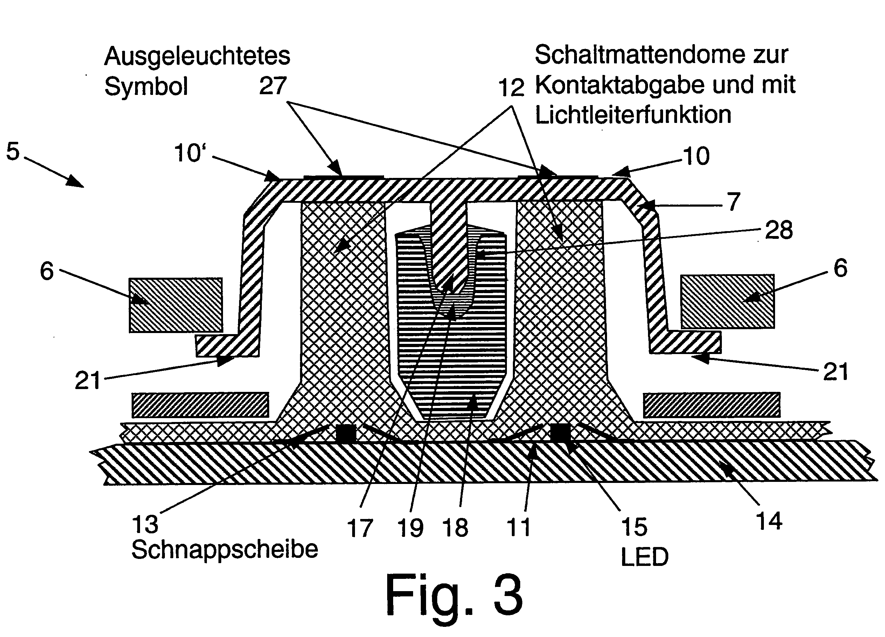

Der elektrische Schalter 5 ist in vergrößerter Ansicht in Fig. 2 gezeigt. Der Schalter 5 besitzt ein Gehäuse 6 sowie ein in der Art einer Wippe ausgestaltetes Betätigungsorgan 7. Vorliegend besitzt der Schalter 5 zwei solche wippenartige Betätigungsorgane 7, 7' sowie zusätzlich ein in der Art einer Drucktaste ausgebildetes Betätigungsorgan 8. Das Betätigungsorgan 8 ist von einer feststehenden Blende 9 umgeben und dient als Bestätigungs- bzw. Entertaste. Das Betätigungsorgan 7, 7' weist wiederum wenigstens eine an der einen Seiten des Betätigungsorgans 7, 7' befindliche Betätigungsfläche 10 zur manuellen Betätigung des Betätigungsorgans 7, 7' auf, wie anhand der Fig. 3 zu erkennen ist. Da vorliegend das wippenartige Betätigungsorgan 7, 7' zweiseitig betätigbar ist, sind an jedem Betätigungsorgan 7, 7' jeweils zwei einander gegenüberliegende Betätigungsflächen 10, 10' befindlich. Da die Betätigungsorgane 7, 7' im wesentlichen gleichartig ausgestaltet sind, wird nachfolgend nur noch das Betätigungsorgan 7 näher betrachtet.

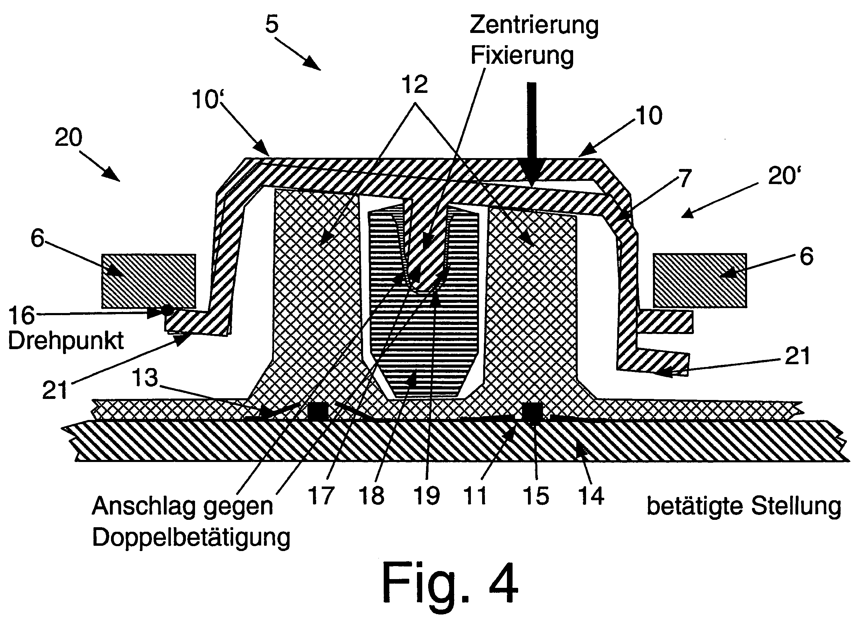

Das Betätigungsorgan 7 ist bei Druck des Bedieners auf eine der Betätigungsflächen 10, 10' um eine in Fig. 4 bezeichnete Drehachse 16 zwischen einer neutralen Stellung und einer Betätigungsstellung verschwenkbar. In der Betätigungsstellung wirkt das Betätigungsorgan 7 schaltend auf wenigstens ein im Gehäuse 6 befindliches Kontaktsystem 11 ein. In der neutralen Stellung hingegen ist das Kontaktsystem 11 ausgeschaltet. Wie weiter in Fig. 3 zu sehen ist, besteht das Kontaktsystem 11 aus einem auf einer Leiterplatte 14 angeordneten Schaltelement, das einen Schaltmattendom 12 sowie eine Schnappscheibe 13 umfasst. Mittig in der Schnappscheibe 13 ist wiederum eine Leuchtdiode 15 auf der Leiterplatte 14 befindlich, wobei das Licht der Leuchtdiode 15 über den Schaltmattendom 12 in der Art eines Lichtleiters zur Beleuchtung eines Symbols 27 am Betätigungsorgan 7 geführt ist.

Das Betätigungsorgan 7 ist mittels einer elastischen Kraft in die neutrale Stellung vorgespannt. Die elastische Kraft wird von einem Element des Kontaktsystems 11, und zwar vorliegend von der Schnappscheibe 13 erzeugt und über den Schaltmattendom 12 auf das Betätigungsorgan 7 übertragen. Es kann die elastische Kraft auch lediglich vom Schaltmattendom 12 oder gemeinsam von der Schnappscheibe 13 sowie dem Schaltmattendom 12 erzeugt werden. Selbstverständlich kann die elastische Kraft auch von einem sonstigen Federelement erzeugt werden, was jedoch nicht weiter gezeigt ist. Wie man anhand der Fig. 3 erkennt, in der die neutrale Stellung des Betätigungsorgans 7 gezeigt ist, bewirkt dabei elastische Kraft, dass ein am Betätigungsorgan 7 befindlicher Wippenrand 21 am Gehäuse 6 anliegt. Bei manueller Betätigung des Betätigungsorgans 7 an der Betätigungsfläche 10 durch den Benutzer wird das Betätigungsorgan 7 verschwenkt, wie in Fig. 4 gezeigt ist. Dabei wirkt die elastische Kraft mit dem Betätigungsorgan 7 derart zusammen, dass das Betätigungsorgan 7, und zwar mit seinem Wippenrand 21, an der der Betätigungsfläche 10 gegenüberliegenden Seite 20 des Betätigungsorgans 7 bzw. im gegenüberliegenden Bereich zur Ausbildung der Drehachse 16 am Gehäuse 6 anliegt. An der der Betätigungsfläche 10 zugeordneten Seite 20' hingegen löst sich der Wippenrand 21 vom Gehäuse 6 zur Durchführung der Verschwenkbewegung und dem dabei erfolgenden Einschalten des Kontaktsystems 11.

Wie bereits erwähnt, weist das Betätigungsorgan 7 an beiden Seiten 20, 20' jeweils eine Betätigungsfläche 10, 10' für jeweils ein zugehöriges Kontaktsystem 11 auf, wobei jeweils eine elastische Kraft durch die Schnappscheiben 13 der Kontaktsysteme 11 auf die Betätigungsflächen 10, 10' ausgeübt wird, so dass die Drehachse 16 wechselseitig an der der jeweilig verschwenkten Betätigungsfläche 10, 10' gegenüberliegenden Seite 20, 20' des Betätigungsorgans 7 ausgebildet ist.

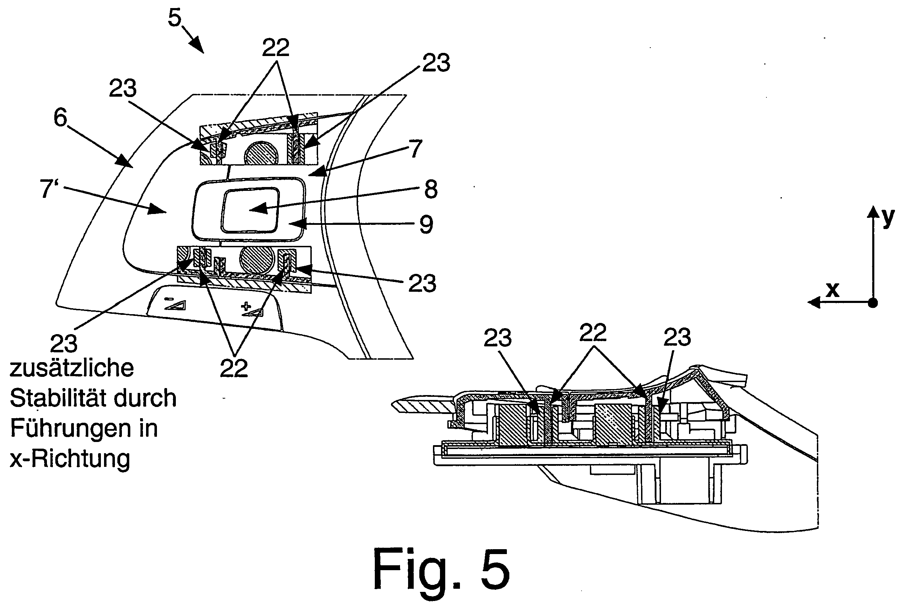

In etwa mittig am Betätigungsorgan 7 ist in weiterer Ausgestaltung ein Zentrierzapfen 17 angeordnet. Der Zentrierzapfen 17 greift in eine in etwa parabelförmig ausgestaltete Aufnahme 19 in einem im Gehäuse 6 befindlichen Dom 18 ein. Wie man anhand von Fig. 4 erkennt, wirkt beim Verschwenken des Betätigungsorgans 7 der Zentrierzapfen 17 mit der Aufnahme 19 derart zusammen, dass die Ausbildung der Drehachse 16 für das Betätigungsorgan 7 an der der Betätigungsfläche 10 gegenüberliegenden Seite 20 des Betätigungsorgans 7 unterstützt ist. Um die Verschwenkbewegung des Betätigungsorgans 7 zu ermöglichen, besitzt der Zentrierzapfen 17 ein in der Fig. 3 deutlich sichtbares Spiel 28 in der Aufnahme 19. Die Aufnahme 19 ist so ausgestaltet, dass diese einen Anschlag für den Zentrierzapfen 17 in der betätigten Stellung des Betätigungsorgans 7 bildet, womit nur jeweils ein Kontaktsystem 11 geschaltet wird. Eine unzulässige Doppelbetätigung beider Kontaktsysteme 11 ist folglich wirksam verhindert. Schließlich ist noch in Fig. 5 gezeigt, dass das Betätigungsorgan 7 über einen Ansatz 22 mit im Gehäuse 6 befindlichen Führungsmitteln 23 in der im wesentlichen zur Drehachse 16 senkrechten Richtung y zusammenwirkt, derart dass das Betätigungsorgan 7 in Richtung x der Drehachse 16 weitgehend fixiert ist.

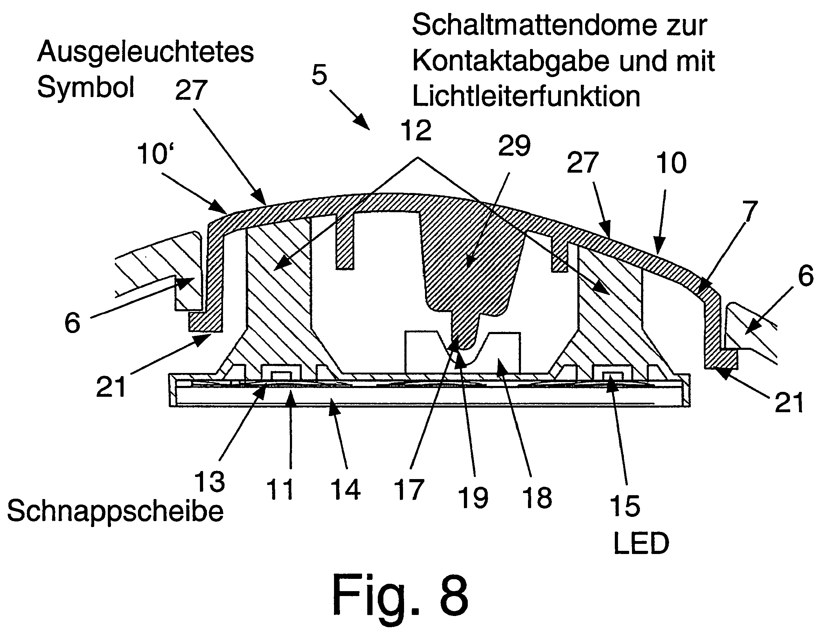

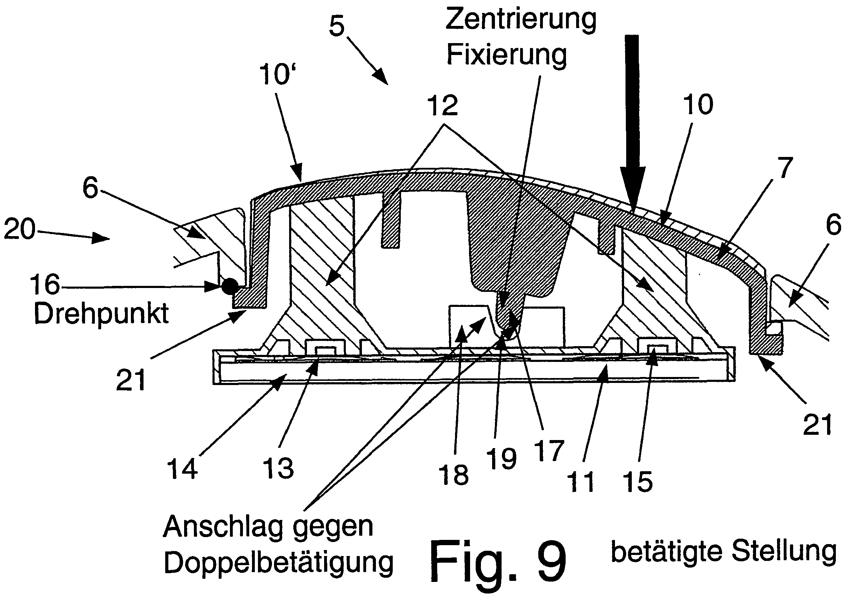

Der Schalter 5 ist in einer weiteren Ausgestaltung in Fig. 8 näher zu sehen. Hier ist der Zentrierzapfen 17 an einem Ansatz 29 befindlich, wobei der Ansatz 29 seinerseits am Betätigungsorgan 7 angeordnet ist. Der Dom 18 ist dementsprechend kleiner sowie platzsparender ausgestaltet. Die vom Betätigungsorgan 7 bewegbaren, mit den Schnappscheiben 13 zusammenwirkenden Schaltmattendome 12 sind etwas detaillierter als in Fig. 3 dargestellt. In Fig. 9 ist weiter die betätigte Stellung des Betätigungsorgans 7 gezeigt, wobei an der linken Seite 20 die durch das Anliegen des Randes 21 des Betätigungsorgans 7 am Gehäuse 6 gebildete Drehachse 16 eingezeichnet ist.

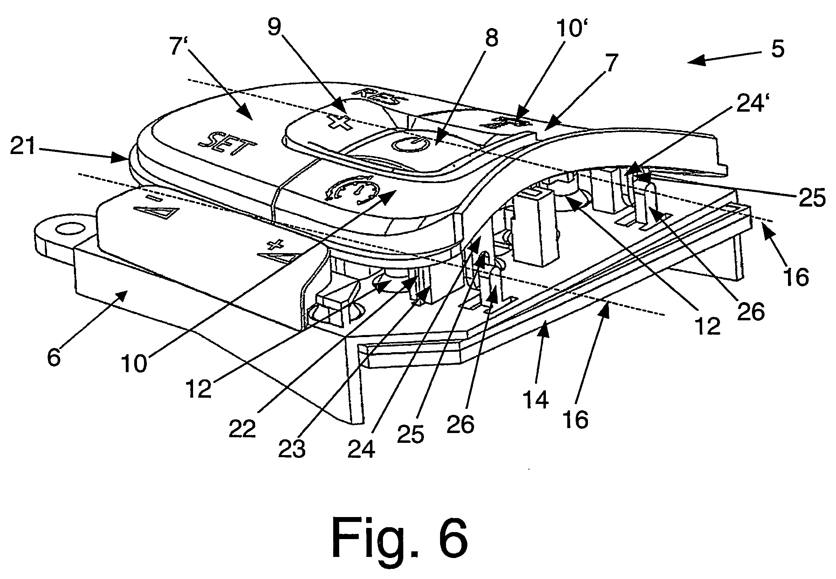

Eine weitere Ausführungsform für den elektrischen Schalter 5 ist in Fig. 6 zu sehen. Der Schalter 5 besitzt wiederum ein Gehäuse 6 sowie wenigstens ein im Gehäuse 6 befindliches, vom Schaltmattendom 12 verdecktes Kontaktsystem 11. Desweiteren besitzt der Schalter 5 ein in der Art einer Wippe ausgestaltetes, um eine Drehachse 16 verschwenkbares Betätigungsorgan 7, das wenigstens eine Betätigungsfläche 10, 10' zur manuellen Betätigung des Betätigungsorgans 7 aufweist. Das Kontaktsystem 11 übt, wie bereits weiter oben beschrieben, die elastische Kraft zum Vorspannen des Betätigungsorgans 7 in die neutrale Stellung aus. Am Betätigungsorgan 7 ist eine der Betätigungsfläche 10, 10' zugeordnete Lasche 24, 24' mit einem Langloch 25 angeordnet, wobei ein im Gehäuse 6 angeordneter, als ein gehäusefestes Lagerelement dienender Zapfen 26 in das Langloch 25 eingreift. Beim Verschwenken des Betätigungsorgans 7 wirkt nun die elastische Kraft mit dem Zapfen 26 sowie dem Langloch 25 derart zusammen, dass das Betätigungsorgan 7 an der der Betätigungsfläche 10 gegenüberliegenden Lasche 24' des Betätigungsorgans 7 mittels des Zapfens 26 zur Ausbildung der Drehachse 16 fixiert ist. Selbstverständlich kann auch umgekehrt der Zapfen an der Betätigungsfläche des Betätigungsorgans sowie die Lasche mit dem Langloch als ein gehäusefestes Lagerelement im Gehäuse angeordnet sein, was jedoch nicht weiter gezeigt ist.

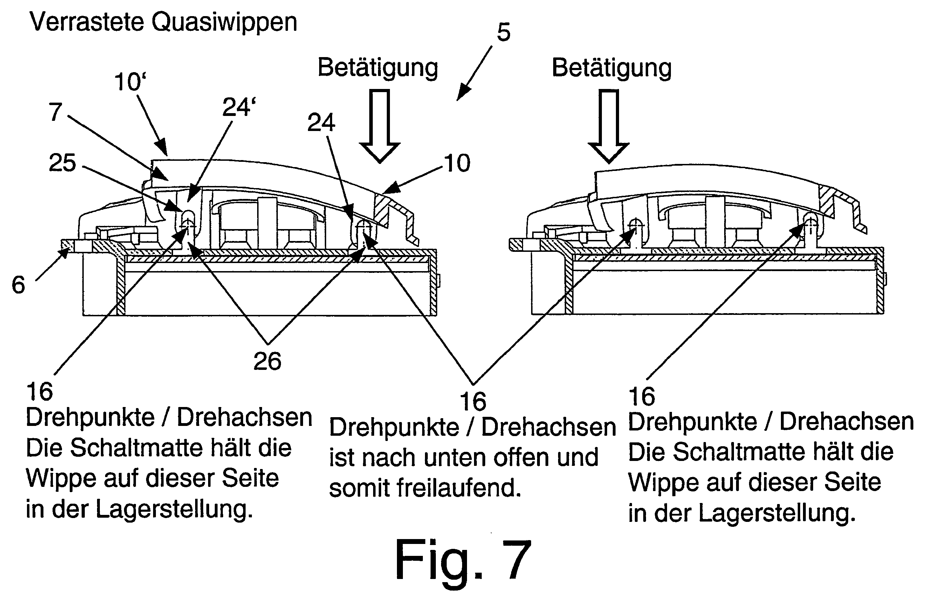

In Fig. 7 ist schließlich ein Schalter 5 wie Fig. 6 zu sehen, wobei hier jedoch das Langloch 25 an der Lasche 24, 24' einseitig offen ausgestaltet ist. Eine derartige Ausgestaltung gestattet ein einfaches Aufrasten des Betätigungsorgans 7 mittels der Laschen 24, 24' auf die als Lagerelemente im Gehäuse 6 dienenden Zapfen 26 bei der Montage des Schalters 5.

Die Erfindung ist nicht auf die beschriebenen und dargestellten Ausführungsbeispiele beschränkt. Sie umfaßt vielmehr auch alle fachmännischen Weiterbildungen im Rahmen der durch die Patentansprüche definierten Erfindung. So kann eine erfindungsgemäße Quasiwippe nicht nur für Multifunktionsschalter im Lenkrad sondern auch für sonstige Bedienschalter, Bedienfelder im Automotive- und/oder Consumerbereich o. dgl. Verwendung finden.

Bezugszeichen-Liste:
- 1:: Lenkrad
- 2:: Lenkradkranz
- 3:: Lenkradspeiche
- 4:: Lenkradtopf
- 5:: (elektrischer) Schalter
- 6:: Gehäuse (von Schalter)
- 7,7':: Betätigungsorgan (Wippe)
- 8:: Betätigungsorgan (Drucktaste)
- 9:: Blende
- 10,10':: Betätigungsfläche
- 11:: Kontaktsystem
- 12:: Schaltmattendom
- 13:: Schnappscheibe
- 14:: Leiterplatte
- 15:: Leuchtdiode
- 16:: Drehachse
- 17:: Zentrierzapfen
- 18:: Dom
- 19:: Aufnahme (in Dom)
- 20,20':: gegenüberliegende Seite (zur Betätigungsfläche)
- 21:: Rand / Wippenrand
- 22:: Ansatz (am Betätigungsorgan)
- 23:: Führungsmittel (im Gehäuse)
- 24,24':: Lasche
- 25:: Langloch
- 26:: Zapfen
- 27:: Symbol
- 28:: Spiel
- 29:: Ansatz

## Patentansprüche

1. Elektrischer Schalter mit einem Gehäuse (6), mit wenigstens einem im Gehäuse (6) befindlichen Kontaktsystem (11), und mit einem in der Art einer Wippe ausgestalteten, um eine Drehachse zwischen einer neutralen Stellung und einer Betätigungsstellung verschwenkbaren Betätigungsorgan (7, 7'), das wenigstens eine an einer Seite des Betätigungsorgans (7, 7') befindliche Betätigungsfläche (10, 10') zum manuellen Verschwenken des Betätigungsorgans (7, 7') aufweist, wobei das Betätigungsorgan (7, 7') mittels einer elastischen Kraft in die neutrale Stellung vorgespannt ist, und wobei das Betätigungsorgan (7, 7') in der Betätigungsstellung schaltend auf das Kontaktsystem (11) einwirkt, wobei
die elastische Kraft mit dem Betätigungsorgan (7, 7') beim Verschwenken des Betätigungsorgans (7, 7') derart zusammenwirkt, dass das Betätigungsorgan (7, 7') an der der Betätigungsfläche (10, 10') gegenüberliegenden Seite (20, 20') des Betätigungsorgans (7, 7') sowie am Rand des Betätigungsorgans (7, 7') zur Ausbildung der Drehachse (16) am Gehäuse (6) und/oder an einem gehäusefesten Lagerelement anliegt, **dadurch gekennzeichnet, dass**
in etwa mittig am Betätigungsorgan (7, 7') ein Zentrierzapfen (17) angeordnet ist, wobei der Zentrierzapfen (17) mit einer Aufnahme (19) in einem im Gehäuse (6) befindlichen Dom (18) beim Verschwenken des Betätigungsorgans (7, 7') derart zusammenwirkt, dass die Ausbildung der Drehachse (16) an der der Betätigungsfläche (10, 10') gegenüberliegenden Seite (20, 20') des Betätigungsorgans (7, 7') durch Anlage des Betätigungsorgans (7, 7') am Gehäuse (6) unterstützt ist, und wobei der Zentrierzapfen (17) ein Spiel (28) in der Aufnahme (19) besitzt, derart dass die Verschwenkbewegung des Betätigungsorgans (7, 7') ermöglicht ist.

2. Elektrischer Schalter nach Anspruch 1, **dadurch gekennzeichnet, dass** die Aufnahme im Dom (18) in etwa parabelförmig ausgestaltet ist.

3. Elektrischer Schalter mit einem Gehäuse (6), mit wenigstens einem im Gehäuse (6) befindlichen Kontaktsystem (11), und mit einem in der Art einer Wippe ausgestalteten, um eine Drehachse zwischen einer neutralen Stellung und einer Betätigungsstellung verschwenkbaren Betätigungsorgan (7, 7'), das wenigstens eine an einer Seite des Betätigungsorgans (7, 7') befindliche Betätigungsfläche (10, 10') zum manuellen Verschwenken des Betätigungsorgans (7, 7') aufweist, wobei das Betätigungsorgan (7, 7') mittels einer elastischen Kraft in die neutrale Stellung vorgespannt ist, und wobei das Betätigungsorgan (7, 7') in der Betätigungsstellung schaltend auf das Kontaktsystem (11) einwirkt, wobei
die elastische Kraft mit dem Betätigungsorgan (7, 7') beim Verschwenken des Betätigungsorgans (7, 7') derart zusammenwirkt, dass das Betätigungsorgan (7, 7') an der der Betätigungsfläche (10, 10') gegenüberliegenden Seite (20, 20') des Betätigungsorgans (7, 7') sowie am Rand des Betätigungsorgans (7, 7') zur Ausbildung der Drehachse (16) am Gehäuse (6) und/oder an einem gehäusefesten Lagerelement anliegt, **dadurch gekennzeichnet, dass**
eine der Betätigungsfläche (10, 10') gegenüberliegende Lasche (24, 24') mit einem Langloch (25) am Betätigungsorgan (7, 7') oder als gehäusefestes Lagerelement im Gehäuse (6) angeordnet ist, wobei ein im Gehäuse (6) als gehäusefestes Lagerelement angeordneter oder am Betätigungsorgan (7, 7') befindlicher Zapfen (26) in das Langloch (25) eingreift, und wobei beim Verschwenken des Betätigungsorgans (7, 7') der Zapfen (26) mit dem Langloch (25) derart zusammenwirkt, dass das Betätigungsorgan (7, 7') an der der Betätigungsfläche (10) gegenüberliegenden Lasche (24') des Betätigungsorgans (7, 7') mittels des Zapfens (26) zur Ausbildung der Drehachse (16) fixiert ist.

4. Elektrischer Schalter nach Anspruch 3, **dadurch gekennzeichnet, dass** jeder Betätigungsfläche (10, 10') des Betätigungsorgans (7, 7') eine Lasche (24, 24') zugeordnet ist.

5. Elektrischer Schalter nach einem der Ansprüche 1 bis 4, **dadurch gekennzeichnet, dass** das Betätigungsorgan (7, 7') an beiden Seiten jeweils eine Betätigungsfläche (10, 10') aufweist, dass vorzugsweise jeweils eine elastische Kraft auf die Betätigungsflächen (10, 10') einwirkt, und dass weiter vorzugsweise die Drehachse (16) wechselseitig an der der jeweilig verschwenkten Betätigungsfläche (10, 10') gegenüberliegenden Seite (20, 20') des Betätigungsorgans (7, 7') ausgebildet ist.

6. Elektrischer Schalter nach einem der Ansprüche 1 bis 5, **dadurch gekennzeichnet, dass** das Kontaktsystem (11) aus einem Schaltelement besteht, das insbesondere einen Schaltmattendom (12), eine Schnappscheibe (13) o. dgl. umfasst, und dass vorzugsweise die elastische Kraft von einem Element des Kontaktsystems (11), insbesondere von der Schnappscheibe (13), dem Schaltmattendom (12) o. dgl., oder von einem Federelement erzeugt ist.

7. Elektrischer Schalter nach einem der Ansprüche 1 bis 6, **dadurch gekennzeichnet, dass** das Betätigungsorgan (7, 7') an der der Betätigungsfläche (10, 10') gegenüberliegenden Seite (20, 20') einen Rand (21) aufweist, wobei insbesondere der Rand (21) mit dem Gehäuse (6) zur Ausbildung der Drehachse (16) zusammenwirkt.

8. Elektrischer Schalter nach einem der Ansprüche 1 bis 7, **dadurch gekennzeichnet, dass** das Betätigungsorgan (7, 7'), beispielsweise mittels eines Ansatzes (22), mit einem Führungsmittel (23) in der im Wesentlichen zur Drehachse (16) senkrechten Richtung zusammenwirkt, derart dass das Betätigungsorgan (7, 7') in Richtung der Drehachse (16) weitgehend fixiert ist.

## Claims

1. An electrical switch having a housing (6), having at least one contact system (11), which is located in the housing (6) and having an operating element (7, 7'), which is designed in the form of a rocker and can be pivoted about a rotation axis between a neutral position and an operating position, which has at least one operating area (10, 10') for manually pivoting the operating element (7, 7'), wherein the operating element (7,7') is pre-stressed into the neutral position by means of an elastic force, and wherein the operating element (7, 7') in the operating position has a switching impact on the contact system (11), wherein the elastic force interacts with the operating element (7, 7') during the pivoting of the operating element (7, 7') in such a way that the operating element (7, 7') bears against the housing (6) or a bearing element fixed relative to the housing on the side (20, 20') of the operating element (7, 7') which is opposite the operating area (10, 10') as well as on the edge of the operating element (7, 7') to form the rotation axis (16), **characterized in that** a centering pin (17) is arranged in approximately the center of the operating element (7, 7'), wherein the centering pin (17) interacts by way of a receptacle (19) in a dome (18) which is located in the housing (6) when the operating element (7, 7') is pivoted in such a way that the formation of the rotational axis (16) is supported on the side (20, 20') of the operating element (7, 7') which is opposite the operating area (10, 10') by arrangement of the operating element (7, 7') on the housing (6), and wherein the centering pin (17) has a play (28) in the receptacle (19), in such a manner that the pivoting motion of the operating element (7, 7') is permitted.

2. An electrical switch according to Claim 1, **characterized in that** the receptacle in the dome (18) is designed to have an approximately parabolic shape.

3. An electrical switch having a housing (6), having at least one contact system (11), and having an operating element (7, 7'), which is designed in the form of a rocker and can be pivoted about a rotation axis between a neutral position and an operating position, which has at least one operating area (10, 10') located on a side of the operating element (7, 7') for manually pivoting the operating element (7, 7'), wherein the operating element (7, 7') is pre-stressed into the neutral position by means of an elastic force, and wherein the operating element (7, 7') in the operating position has a switching impact on the contact system (11), wherein the elastic force interacts with the operating element (7, 7') during the pivoting of the operating element (7, 7') in such a way that the operating element (7, 7') bears against the housing (6) or a bearing element fixed relative to the housing on the side (20, 20') of the operating element (7, 7'), which is opposite the operating area (10, 10') as well as on the edge of the operating element (7, 7') to form the rotation axis (16), **characterized in that** a bracket (24, 24') opposite the operating area (10, 10') having an elongated hole (25) is arranged on the operating element (7, 7') or as a bearing element in the housing (7) fixed relative to the housing, wherein a pin (26) arranged in the housing (6) as a bearing element fixed relative to the housing or located on the operating element (7, 7') engages in the elongated hole (25), and wherein during the pivoting of the operating element (7, 7') the pin (26) interacts with the elongated hole (25) in such a way that the operating element (7, 7') is fixed on the bracket (24') of the operating element (7, 7') opposite the operating area (10) by means of the pin (26) to form the rotational axis (16).

4. An electrical switch according to Claim 3, **characterized in that** a bracket (24, 24') is assigned to each operating area (10, 10') of the operating element (7, 7').

5. An electrical switch according to any one of Claims 1 to 4, **characterized in that** the operating element (7, 7') has on both sides in each case an operating area (10, 10'), that preferably in each case an elastic force acts on the operating areas (10, 10'), and that further preferably the rotational axis (16) is reciprocally formed on the side (20, 20') of the operating element (7, 7') opposite the respective pivoted operating area (10, 10').

6. An electrical switch according to an one of Claims 1 to 5, **characterized in that** the contact system (11) consists of a switch element, which in particular comprises a switch mat dome (12), a snap disc (13) or the like, and that preferably the elastic force is generated by an element of the contact system (11), in particular by the snap disc (13), the switch mat dome (12) or the like, or by a spring element.

7. An electrical switch according to any one of Claims 1 to 6, **characterized in that** the operating element (7, 7') has an edge (21) on the side (20, 20') opposite the operating area (10, 10'), wherein in particular the edge (21) interacts with the housing (6) to form the rotational axis (16).

8. An electrical switch according to any one Claims 1 to 7, **characterized in that** the operating element (7, 7'), for example, by means of a projection (22), interacts with a guidance means (23) in the direction perpendicular substantially to the rotational axis (16), in such a way that the operating element (7, 7') is largely fixed in the direction of the rotational axis (16).

## Revendications

1. Commutateur électrique avec un boîtier (6), avec au moins un système de contact (11) disposé dans un boîtier (6) et avec un organe d'actionnement (7,7'), conçu comme une bascule, pivotant autour d'un axe de rotation entre une position neutre et une position d'actionnement, qui comprend au moins une surface d'actionnement (10, 10') se trouvant sur un côté de l'organe d'actionnement (7, 7') pour le pivotement manuel de l'organe d'actionnement (7, 7'), l'organe d'actionnement (7, 7') étant précontraint dans la position neutre au moyen d'une force élastique et l'organe d'actionnement (7, 7') agissant de manière commutatrice sur le système de contact (11), la force élastique interagissant avec l'organe d'actionnement (7, 7') lors du pivotement de l'organe d'actionnement (7, 7') de façon à ce que l'organe d'actionnement (7, 7') s'appuie contre le côté opposé de la surface d'actionnement (10, 10') de l'organe d'actionnement ainsi que contre le bord (20, 20') de l'organe d'actionnement (7, 7') pour la formation de l'axe de rotation (16) au niveau du boîtier (6) et/ou au niveau d'un élément de palier solidaire avec le boîtier, **caractérisé en ce que**, approximativement au centre de l'organe d'actionnement (7, 7'), se trouve un tenon de centrage (17), le tenon de centrage (17) interagissant avec un logement (19) dans un mandrin (18) se trouvant dans le boîtier (6) lors du pivotement de l'organe d'actionnement (7, 7') de façon à ce que la formation de l'axe de rotation (16) au niveau du côté (20, 20') de l'organe d'actionnement (7, 7') opposé à la surface d'actionnement (10, 10') est soutenue par l'appui de l'organe d'actionnement (7, 7') contre le boîtier (6) et le tenon de centrage (17) présente un jeu (28) dans le logement (19), de façon à permettre le mouvement de pivotement de l'organe d'actionnement (7, 7').

2. Commutateur électrique selon la revendication 1, **caractérisé en ce que** le logement dans le mandrin (18) présente approximativement une forme parabolique.

3. Commutateur électrique avec un boîtier (6), avec au moins un système de contact (11) disposé dans le boîtier (6) et avec un organe d'actionnement (7, 7'), conçu comme une bascule, pivotant autour d'un axe de rotation entre une position neutre et une position d'actionnement, qui comprend au moins une surface d'actionnement (10, 10') se trouvant sur un côté de l'organe d'actionnement (7, 7') pour le pivotement manuel de l'organe d'actionnement (7, 7'), l'organe d'actionnement (7, 7') étant précontraint dans la position neutre au moyen d'une force élastique et l'organe d'actionnement (7, 7') agissant de manière commutatrice sur le système de contact (11), la force élastique interagissant avec l'organe d'actionnement (7, 7') lors du pivotement de l'organe d'actionnement (7, 7') de façon à ce que l'organe d'actionnement (7, 7') s'appuie contre le côté opposé de la surface d'actionnement (10, 10') de l'organe d'actionnement ainsi que contre le bord (20, 20') de l'organe d'actionnement (7, 7') pour la formation de l'axe de rotation (16) au niveau du boîtier (6) et/ou au niveau d'un élément de palier solidaire avec le boîtier, **caractérisé en ce qu'**une patte (24, 24') opposée à la surface d'actionnement (10, 10') est réalisée, avec un trou oblong (25), sur l'organe d'actionnement (7, 7') ou en tant qu'élément de palier solidaire avec le boîtier dans le boîtier (6), un tenon (26), conçu comme un élément de palier solidaire avec le boîtier, disposé dans le boîtier (6) ou se trouvant sur l'organe d'actionnement (7, 7'), s'emboîtant dans le trou oblong (25) et, lors du pivotement de l'organe d'actionnement (7, 7'), le tenon (26) interagissant avec le trou oblong (25) de façon à ce que l'organe d'actionnement (7, 7') soit fixé à la patte (24'), opposée à la surface d'actionnement (10), de l'organe d'actionnement (7, 7') au moyen du tenon (26) pour la formation de l'axe de rotation (16).

4. Commutateur électrique selon la revendication 3, **caractérisé en ce qu'**à chaque surface d'actionnement (10, 10') de l'organe d'actionnement (7, 7') correspond une patte (24, 24').

5. Commutateur électrique selon l'une des revendications 1 à 4, **caractérisé en ce que** l'organe d'actionnement (7, 7') comprend, des deux côté, une surface d'actionnement (10, 10'), **en ce que** de préférence une force élastique agit sur les surfaces d'actionnement (10, 10') et **en ce que** de préférence l'axe de rotation (16) est formé mutuellement sur le côté opposé (20, 20'), opposé à la surface d'actionnement (10, 10') pivotée, de l'organe d'actionnement (7, 7').

6. Commutateur électrique selon l'une des revendications 1 à 5, **caractérisé en ce que** le système de contact (11) est constitué d'un élément de commutation qui comprend plus particulièrement un mandrin à tapis de commutation (12), une platine à déclic (13) ou autre et **en ce que** de préférence la force élastique est produite par un élément du système de contact (11), plus particulièrement par la platine à déclic (13), le mandrin à tapis de commutation (12) ou autre ou par un élément à ressort.

7. Commutateur électrique selon l'une des revendications 1 à 6, **caractérisé en ce que** l'organe d'actionnement (7, 7') comprend, au niveau du côté opposé (20, 20') à la surface d'actionnement (10, 10'), un bord (21), plus particulièrement le bord (21) interagissant avec le boîtier (6) pour la formation de l'axe de rotation (16).

8. Commutateur électrique selon l'une des revendications 1 à 7, **caractérisé en ce que** l'organe d'actionnement (7, 7') interagit, par exemple au moyen d'un épaulement (22), avec un moyen de guidage (23) dans la direction globalement perpendiculaire à l'axe de rotation (16), de façon à ce que l'organe d'actionnement (7, 7') soit largement fixé en direction de l'axe de rotation (16).
